(19) Europäisches Patentamt

European Patent Office

Office européen des brevets

(11) **EP 0 843 912 B1**

(12) **EUROPÄISCHE PATENTSCHRIFT**

(45) Veröffentlichungstag und Bekanntmachung des Hinweises auf die Patenterteilung:
**06.05.1999 Patentblatt 1999/18**

(21) Anmeldenummer: **96933315.2**

(22) Anmeldetag: **06.08.1996**

(51) Int Cl.$^6$: **H02P 1/26**, H02P 7/46,
H02P 7/625, H02P 9/42

(86) Internationale Anmeldenummer:
**PCT/DE96/01467**

(87) Internationale Veröffentlichungsnummer:
**WO 97/07589 (27.02.1997 Gazette 1997/10)**

(54) **VERFAHREN UND EINRICHTUNG ZUM BETREIBEN EINER ASYNCHRONMASCHINE**

PROCESS AND DEVICE FOR OPERATING AN ASYNCHRONOUS MOTOR

PROCEDE ET DISPOSITIF D'ACTIONNEMENT D'UN MOTEUR ASYNCHRONE

(84) Benannte Vertragsstaaten:
**AT CH DE IT LI LU**

(30) Priorität: **11.08.1995 DE 19529638**

(43) Veröffentlichungstag der Anmeldung:
**27.05.1998 Patentblatt 1998/22**

(73) Patentinhaber: **SIEMENS AKTIENGESELLSCHAFT**
**80333 München (DE)**

(72) Erfinder: **RÖSNER, Peter**
**D-91058 Erlangen (DE)**

(56) Entgegenhaltungen:
EP-A- 0 203 436        DE-A- 2 150 531
US-A- 4 132 931

- PATENT ABSTRACTS OF JAPAN Bd. 012, Nr. 367 (E-664) 30 September 1988 & JP,A,63 117 678 (FUJI ELECTRIC CO LTD) 21 Mai 1988
- SOVIET INVENTIONS ILLUSTRATED Section EI, Week 8517 5.Juni 1985 Derwent Publications Ltd., London, GB; Class X13, AN 85-103758 XP002022444 & SU,A,1 116 516 (TSGOEV R S), 30.September 1984

## Beschreibung

Die Erfindung bezieht sich auf ein Verfahren und eine Einrichtung zum Betreiben einer Asynchronmaschine wie sie aus der EP-A-203436 bekannt sind.

Neuere Studien in Japan, USA und Europa haben gezeigt, daß Maschinensätze mit regelbarer Drehzahl teilweise erhebliche Vorteile gegenüber Anlagen mit starrer Drehzahl aufweisen. Dies gilt insbesondere für Maschinensatze in Wasserkraftanlagen mit stark schwankender Fallhöhe, bei denen der Wirkungsgrad durch Drehzahlverstellung sowohl im Generator- als auch im Pumpbetrieb optimiert werden kann.

In Wasserkraftanlagen mit drehzahlregelbaren Maschinensätzen werden die Maschinen über statische Frequenzumrichter mit dem Netz verbunden. Dadurch sind Netzfrequenz und Maschinenfrequenz voneinander entkoppelt.

Aus dem Artikel "Static Frequency Converters for Adjustable-Speed Sets" von O. Warneke, International Water Power & Dam Construction, June 1995, Seiten 36 bis 38 ist bekannt, daß eine der gebräuchlichsten Umrichter-Maschinen-Varianten im Bereich mittlerer und großer Leistung, d.h. ab ca. 6 MW bis zu mehreren hundert MW, eine doppelt gespeiste drehzahlvariable Asynchronmaschine mit Direktumrichtereinheit ist. Diese Anlage kann sowohl im Motor- als auch im Generatorbetrieb jeweils mit einstellbarer Drehzahl betrieben werden. Dabei muß auch aus dem Stillstand zum Motorbetrieb angefahren werden. Außerdem kann sowohl aus dem motorischen als auch aus dem generatorischen Betrieb bis zum Stillstand abgebremst werden.

In den Ausführungen "Die Induktionsmaschinen" von R. Richter, Verlag Birkhäuser, Basel/Stuttgart (1954), Band IV, sind unter anderem Verfahren zum Betreiben von Maschinen offenbart, bei denen die Maschinen für doppelt synchronen Dauerbetrieb optimiert sind.

Bei einem ersten Verfahren werden die Ständer- und die Läuferwicklung der drehzahlvariablen Asynchronmaschine in Reihe geschaltet und von der Direktumrichtereinheit gespeist. Hierzu müssen zusätzliche Leistungsschalter mit erheblichem Kostenaufwand eingesetzt werden.

In einem zweiten Verfahren werden die Ständer- und die Läuferwicklung der drehzahlvariablen Asynchronmaschine parallel geschaltet. Da das Verhältnis zwischen Ständer- und Läuferstrom durch deren Impedanzen bestimmt wird und die Asynchronmaschine für den Netzbetrieb optimiert ist, d.h. keine Optimierung bzgl. des Anfahrens und Abbremsens gegeben ist, ergibt sich nur ein unzureichendes Drehmoment.

Gleichartige Verfahren sind ebenfalls aus der EP 0 200 082 und aus dem Artikel "A High Performance Parameter-Insentive Drive Using a Series-Connected Wound Rotor Induction Motor" von Edward Ho und Paresh Sen, IEEE Transaction on Industry Applications, 1989, Heft 6, Seiten 1132 bis 1138, bekannt.

Desweiteren sind aus der Deutschen Offenlegungsschrift 2 150 531, dem US-Patent 4,132,931 und dem Artikel "The Double-Fed Induction Motor", von D. Lecocq, D. Lataire und W. Wymeersch, EPE Journal, Vol. 1, Heft 2, 1991, Seiten 103 bis 112, Asynchron-Schleifringmaschinen mit jeweils einem Direktumrichter im Ständer- und Läuferkreis zum Anfahren und Bremsen bekannt.

Die bekannten Verfahren erweisen sich bei Optimierung der Maschine für Dauerbetrieb mit Direktumrichtereinheit als problematisch, wenn nach doppeltsynchroner Methode angefahren und gebremst werden soll.

Üblicherweise werden zum Anfahren der drehzahlvariablen Asynchronmaschine Anfahrmotoren oder -turbinen, Schaltungen für Teilspannungsanlauf oder spezielle Anfahrumrichter mit Zwischenkreisumrichtern eingesetzt. Dies hat einen großen apparativen und finanziellen Aufwand zur Folge.

Der Erfindung liegt nun die Aufgabe zugrunde, ein Verfahren zum Betreiben einer Asynchronmaschine anzugeben, bei dem es zum Optimieren des Anfahrens nur eines geringen zusätzlichen apparativen und finanziellen Aufwandes bedarf. Außerdem soll eine Einrichtung zum Durchführen des Verfahrens angegeben werden.

Die erstgenannte Aufgabe wird gemäß der Erfindung gelöst durch ein Verfahren zum Betreiben einer Asynchronmaschine, deren Laufer und Ständer beim Anfahren mit einer ersten bzw. zweiten Direktumrichtereinheit gesteuert werden, wobei nach dem Anfahren die zweite Direktumrichtereinheit vom Ständer getrennt und parallel zur ersten Direktumrichtereinheit auf den Läufer geschaltet wird.

Die zweitgenannte Aufgabe wird gemäß der Erfindung gelöst durch eine in Anspruch 3 definierte Einrichtung zum Betreiben einer Asynchronmaschine, bei der zum Anfahren des Läufers und des Ständers eine erste bzw. zweite Direktumrichtereinheit vorgesehen sind, wobei ein erster Schalter zum Abtrennen der zweiten Direktumrichtereinheit dem Ständer vorgeschaltet ist, und ein zweiter Schalter zum Parallelschalten der ersten und zweiten Direktumrichtereinheit auf den Läufer vorgesehen ist.

Dadurch wird eine an die unterschiedlichen Anforderungen beim Anfahren und beim Netzbetrieb angepaßte Steuerung des Läufers und des Ständers gewährleistet. Für den Vorgang des Anfahrens der drehzahlvariablen Asynchronmaschine kann eine Direktumrichtereinheit benutzt werden, die bereits für die Auslegung des Netzbetriebes vorhanden ist. Sie wird hierfür lediglich in einer modifizierten Weise, d.h. sie wird in zwei Direktumrichtereinheiten aufgeteilt, betrieben. Es werden keine speziellen Anfahrmotoren oder -turbinen, Schaltungen für Teilspannungsanlauf oder spezielle Anfahrumrichter mit Zwischenkreisumrichtern eingesetzt.

Dies hat einen Einsparungseffekt auf der apparativen und finanziellen Seite zur Folge. Außerdem werden keine zusätzlichen Räumlichkeiten benötigt. Mit einfachen apparativ nicht aufwendigen Schaltern kann nach Beendigung des Anfahrens der Asynchronmaschine durch Umschalten der Netzbetrieb eingeleitet werden.

Die Anzahl der Transformatoren und Direktumrichter, aus denen sich die erste und die zweite Direktumrichtereinheit zusammensetzten, ist abhängig vom Übersetzungsverhältnis, d.h. dem Verhältnis der Wicklungszahlen $w_S$ und $w_L$ von Ständer bzw. Läufer, der drehzahlvariablen Asynchronmaschine.

Vorzugsweise werden mit der ersten und zweiten Direktumrichtereinheit der Ständerstrom $I_S$ bzw. der Läuferstrom $I_L$ auf das Verhältnis

$$I_S\, w_S\, /\, I_L\, w_L = 1,$$

mit vorgegebenen Wicklungszahlen $w_S$ und $w_L$ des Ständers bzw. des Läufers, gesteuert. Werden der Ständerstrom $I_S$ und der Läuferstrom $I_L$ auf das Verhältnis optimiert, so erhält man ein ausreichendes Drehmoment und ein sanftes Anfahren aus dem Stillstand in der von dem Betreiber geforderten Zeit. Das Bremsen erfolgt mit der gleichen Schaltung mit entsprechender Steuerung der beiden Direktumrichtereinheiten, so daß das Bremsmoment entsprechend den betrieblichen Erfordernissen frei einstellbar ist. Die erste und zweite Direktumrichtereinheit sind somit individuell an das Übersetzungsverhältnis der drehzahlvariablen Asynchronmaschine angepaßt.

Insbesondere ist ein erster Schalter zum Abtrennen der zweiten Direktumrichtereinheit dem Ständer vorgeschaltet.

In einer weiteren vorteilhaften Ausgestaltung ist ein zweiter Schalter zum Parallelschalten der ersten und zweiten Direktumrichtereinheit auf den Läufer vorgesehen.

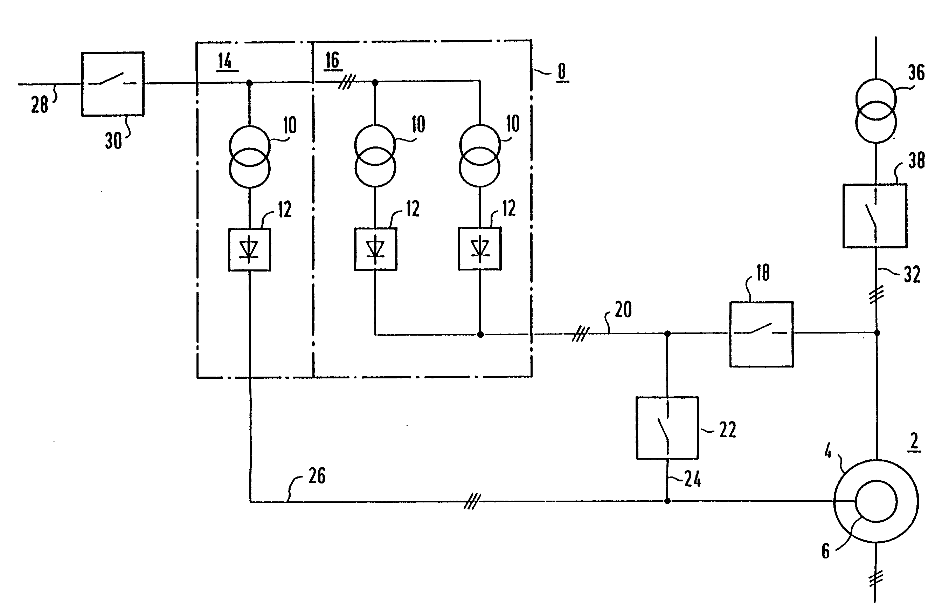

Zur weiteren Erläuterung der Erfindung wird auf das Ausführungsbeispiel der Zeichnung verwiesen, in deren einziger Figur eine Einrichtung zum Betreiben einer Asynchronmaschine schematisch dargestellt ist.

Gemäß der Figur ist eine Direktumrichtereinheit 8 in eine erste und zweite Direktumrichtereinheit 14 bzw. 16 aufgeteilt. Die Direktumrichtereinheit 8 umfaßt in Serie geschaltete Umrichtertrafos 10 und Direktumrichter 12.

Zum Anfahren und/oder Bremsen einer Asynchronmaschine 2 wird die Direktumrichtereinheit 8 benutzt, welche bereits für die Auslegung des Netzbetriebes vorhanden ist. Sie wird lediglich in einer modifizierten Weise, d.h. sie wird hier in zwei Direktumrichtereinheiten 14 und 16 aufgeteilt, betrieben. Es werden keine speziellen Anfahrmotoren oder -turbinen, Schaltungen für Teilspannungsanlauf oder spezielle Anfahrumrichter mit Zwischenkreisumrichtern eingesetzt. Dies hat einen Einsparungseffekt auf der apparativen und finanziellen Seite zur Folge.

Über eine Netzanschlußleitung 28 mit einem ersten Netzschalter 30 wird der Drehstrom direkt aus dem Netz in die erste und zweite Direktumrichtereinheit 14 bzw. 16 eingespeist. Alternativ kann der Drehstrom auch über einen Netztransformator eingespeist werden.

Die erste Direktumrichtereinheit 14 speist über eine Leitung 26 in den Läufer 6 der Asynchronmaschine 2 ein. Die zweite Direktumrichtereinheit 16 speist über eine Leitung 20 in eine Leitung 32 ein, wobei diese an den Ständer 4 der Asynchronmaschine 2 angeschlossen ist.

In der Leitung 20 ist ein erster Schalter 18 angeordnet. Zwischen der zweiten Direktumrichtereinheit 16 und dem ersten Schalter 18 zweigt eine Leitung 24 ab und mündet zwischen der ersten Direktumrichtereinheit 14 und dem Läufer 6 in die Leitung 26.

In der Leitung 24 ist ein zweiter Schalter 22 angeordnet. Mit den beiden Schaltern 18 und 22 kann ein einfaches Umschalten zwischen dem Anfahren bzw. Bremsen und dem Netzbetrieb erfolgen. Im Netzbetrieb sind die erste und zweite Direktumrichtereinheit 14 bzw. 16 über den zweiten Schalter 22 parallel auf die Drehstromwicklung des Läufers 6 geschaltet. Zum Anfahren bzw. Bremsen wird mit dem zweiten Schalter 22 die zweite Direktumrichtereinheit 16 von dem Läufer 6 getrennt und über den ersten Schalter 18 mit dem Ständer 4 verbunden. Hierbei sind die Drehfeldfrequenzen des Ständers 4 und des Läufers 6 identisch, wobei die Drehfeldrichtungen gegenläufig sind.

Der Drehstrom aus dem Netz wird bei Netzbetrieb über einen Netztransformator 36 und die Leitung 32 in den Ständer 4 eingespeist. Zwischen dem Netztransformator 36 und dem Ständer 4 ist ein zweiter Netzschalter 38 angeordnet. Die Leitung 20 ist zwischen dem zweiten Netzschalter 38 und dem Ständer 4 an die Leitung 32 angeschlossen.

Beim Anfahren der Asynchronmaschine 2 aus dem Stillstand ist der erste Netzschalter 30 geschlossen, damit die beiden Direktumrichtereinheiten 14 und 16 mit Drehstrom gespeist werden können. Der zweite Netzschalter 38 ist geöffnet, d.h. während des Anfahrens wird die Asynchronmaschine 2 nur aus den Direktumrichtereinheiten 14 und 16 gespeist. Der erste Schalter 18 ist geschlossen und der zweite Schalter 22 ist geöffnet. Demzufolge werden der Ständer 4 und der Läufer 6 von der zweiten bzw. ersten Direktumrichtereinheit 16 bzw. 14 gespeist.

Der Ständerstrom $I_S$ und der Läuferstrom $I_L$ werden auf das Verhältnis

$$I_S\, w_S\, /\, I_L\, w_L = 1,$$

mit vorgegebenen Wicklungszahlen $w_S$ und $w_L$ des Ständers 4 bzw. des Läufers 6, gesteuert. Werden der Ständerstrom $I_S$ und der Läuferstrom $I_L$ auf das Verhältnis optimiert, so erhält man ein großes Drehmoment und ein sanftes Anfahren aus dem Stillstand.

Nach dem Anfahren der Asynchronmaschine 2, d.h. für den Netzbetrieb, wird die zweite Direktumrichtereinheit 16 mit dem ersten Schalter 18 vom Ständer 4 getrennt und mit dem zweiten Schalter 22 parallel zur ersten Direktumrichtereinheit 14 auf den Läufer 6 geschaltet.

Zum Bremsen der Asynchronmaschine 2 ist der Netzschalter 38 geöffnet. Die Schaltung der ersten und zweiten Direktumrichtereinheit 14 bzw. 16 entspricht derjenigen während des Anfahrens. Die Steuerung der ersten und zweiten Direktumrichtereinheit 14 bzw. 16 wird so ausgelegt, daß eine Rückspeisung der kinetischen Energie der Asynchronmaschine 2 über den Netzschalter 30 in das Netz erfolgen kann.

## Patentansprüche

1. Verfahren zum Betreiben einer Asynchronmaschine (2), deren Läufer (6) und Ständer (4) beim Anfahren mit einer ersten bzw. zweiten Direktumrichtereinheit (14 bzw. 16) gesteuert werden, wobei nach dem Anfahren die zweite Direktumrichtereinheit (16) vom Ständer (4) getrennt und parallel zur ersten Direktumrichtereinheit (14) auf den Läufer (6) geschaltet wird.

2. Verfahren nach Anspruch 1, bei dem mit der ersten und zweiten Direktumrichtereinheit (14 und 16) der Ständerstrom $I_S$ bzw. der Läuferstrom $I_L$ auf das Verhältnis

$$I_S \, w_S \, / \, I_L \, w_L = 1,$$

mit vorgegebenen Wicklungszahlen $w_S$ und $w_L$ des Ständers (4) bzw. des Läufers (6), gesteuert werden.

3. Einrichtung zum Betreiben einer Asynchronmaschine (2), bei der zum Anfahren des Läufers (6) und des Ständers (4) eine erste bzw. zweite Direktumrichtereinheit (14 bzw. 16) vorgesehen sind, wobei ein erster Schalter (18) zum Abtrennen der zweiten Direktumrichtereinheit (16) dem Ständer (4) vorgeschaltet ist, und ein zweiter Schalter (22) zum Parallelschalten der ersten und zweiten Direktumrichtereinheit (14, 16) auf den Läufer (6) vorgesehen ist.

## Claims

1. Method for operating an asynchronous machine (2) whose rotor (6) and stator (4) are controlled during start-up by a first and, respectively, second direct converter unit (14 and 16, respectively), after the start-up the second direct converter unit (16) being isolated from the stator (4) and being connected to the rotor (6) in parallel with the first direct converter unit (14).

2. Method according to Claim 1, in which the first and second direct converter units (14 and 16) are used to control the stator current $I_S$ and the rotor current $I_L$ to the ratio

$$I_S \, w_S \, / \, I_L \, w_L = 1$$

with given winding numbers $w_S$ and $w_L$ of the stator (4) and, respectively, the rotor (6).

3. Device for operating an asynchronous machine (2), in which a first and, respectively, second direct converter unit (14 and 16, respectively) are provided for the start-up of the rotor (6) and the stator (4), a first switch (18) for isolating the second direct converter unit (16) being connected in series in advance of the stator (4), and a second switch (22) being provided for connecting the first and second direct converter units (14, 16) in parallel to the rotor (6).

## Revendications

1. Procédé pour faire fonctionner un moteur (2) asynchrone, dont le rotor (6) et le stator (4) sont commandés lors du démarrage par une première unité de convertisseur directe (14) et par une seconde unité de convertisseur directe (16), la seconde unité de convertisseur directe (16) étant, après le démarrage, séparée du stator (4) et branchée sur le rotor (6) en parallèle avec la première unité de convertisseur directe (14).

2. Procédé suivant la revendication 1, dans lequel par la première unité de convertisseur directe (14) et par la seconde unité de convertisseur directe (16), le courant $I_S$ de stator et le courant $I_L$ de rotor sont commandés suivant la relation

$$I_S \, w_S \, / \, I_L \, w_L = 1,$$

$w_S$ et $w_L$ étant respectivement les nombres d'enroulements, donnés à l'avance, du stator (4) et du rotor (6).

3. Dispositif pour faire fonctionner un moteur (2) asynchrone, dans lequel il est prévu, pour le démarrage du rotor (6) et du stator (4), une première unité de convertisseur directe (14) et une seconde unité de convertisseur directe (16), un premier interrupteur (18) étant monté en amont du stator (4) pour séparer la seconde unité de convertisseur directe (16) et un second interrupteur (22) étant prévu pour le

7      EP 0 843 912 B1      8

montage en parallèle de la première et de la seconde unité de convertisseur directe (14,16) sur le rotor (6).